# NEUE EUROPÄISCHE PATENTSCHRIFT

(11) **EP 1 656 581 B2**
(45) Veröffentlichungstag und Bekanntmachung des Hinweises auf die Entscheidung über den Einspruch: **26.03.2014**
(45) Hinweis auf die Patenterteilung: 29.12.2010
(21) Anmeldenummer: 04764216.0
(22) Anmeldetag: 17.08.2004
(51) Int. Cl.: G02C 7/02

(54) **INDIVIDUELLES EINSTÄRKENBRILLENGLAS**
INDIVIDUAL SINGLE VISION SPECTACLES
VERRE DE LUNETTES UNIFOCAL INDIVIDUEL

(30) Priorität: 19.08.2003 DE 10338033
(43) Veröffentlichungstag der Anmeldung: 17.05.2006
(73) Patentinhaber: Rodenstock GmbH, 80687 München (DE)
(72) Erfinder: ESSER, Gregor, 81735 München (DE); MÜLLER, Werner, 75443 Ötisheim (DE); PFEIFFER, Herbert, 81247 München (DE); ALTHEIMER, Helmut, 87650 Baisweil-Lauchdorf (DE); BAUMBACH, Peter, 81543 München (DE); HAIMERL, Walter, 80337 München (DE); BROSIG, Jochen, 85604 Zorneding (DE)
(74) Vertreter: Müller-Boré & Partner Patentanwälte PartG mbB
(86) Internationale Anmeldenummer: PCT/EP2004/009228
(87) Internationale Veröffentlichungsnummer: WO 2005/019904

(56) Entgegenhaltungen:
- WO-A-01/44859
- WO-A-97/35224
- WO-A-2004/063794
- DE-A- 10 103 113
- GB-A- 165 834
- US-A- 1 715 784
- US-A- 1 942 400
- US-A1- 2002 089 642

## Beschreibung

Die Erfindung betrifft ein Verfahren zur Herstellung eines Einstärkenbrillenglases, eine Vorrichtung zur Herstellung eines Einstärkenbrillenglases sowie ein individuelles Einstärkenbrillenglas.

Einstärkenbrillengläser, bei welchen sich die dioptrische Wirkung im Gegensatz zu progressiven Brillengläsern entlang eines Vertikalschnitts nominell nicht ändert, sind im Stand der Technik wohl bekannt (vgl. insbesondere DE 190 01 726, DE 190 20 244, DE 190 21 047 und EP 96 945 697 der Rodenstock GmbH, München, Deutschland). Derartige moderne Einstärkengläser mit asphärischen oder atorischen Flächen weisen bei vorteilhaften kosmetischen Merkmalen ausgezeichnete optische Abbildungseigenschaften auf.

Das Dokument US 2002/0089642 A1 offenbart ein Brillenglas mit einer asphärischen Fläche. Der Referenzpunkt für die Fassung, der mit der Pupillenposition des Benutzers übereinstimmt, wenn das Brillenglas in die Fassung eingebaut ist, befindet sich dezentriert vom geometrischen Zentrum des Brillenglasrohlings. Desweiteren geht die Symmetrieaxe der asphärischen Oberfläche durch den Referenzpunkt für die Fassung. Dadurch kann ein Brillenglasrohling mit einer kleinen Größe zur Herstellung einer Brille mit einem großen Rahmen benutzt werden.

In Dokument WO 01/44859 wird ein Brillenglas beschrieben, das hinsichtlich des astigmatischen Fehlers und/oder der Brechwertabweichung möglichst gut optimiert ist. Die Korrektur der Abbildungsfehler wird für eine oder mehrere Vorzugsrichtungen vorgenommen. Wenigstens eine der beiden Flächen des Brillenglases ist eine atorische Fläche.

Der Inhalt des Dokuments WO 2004/063794 stellt einen Stand der Technik nach Art. 54 (3) EPC dar. Offenbart werden Brillen, deren Fassungen Brillengläser des "wrap around"-Typs aufnehmen können.

Im Stand der Technik sind ferner sogenannte Progressivgläser bekannt, bei welchen sich die Brechkraft zwischen einem Fernteil und einem Nahteil unterscheidet, zwischen welchen die sogenannte Progressionszone angeordnet ist, in welcher die Wirkung des Brillenglases von der des Kernteils kontinuierlich auf die des Nahteils ansteigt. Für derartige progressive Brillengläser wurde beispielsweise in der EP 0 880 046 A1 der Seiko Epson Corporation, Tokyo, Japan oder in der WO 01/57584 der Rodenstock GmbH, München, Deutschland vorgeschlagen, individuelle Brillenträgerdaten eines bestimmten, individuellen Brillenträgers bei dem Design- bzw. Herstellungsprozeß des Progressivglases zu berücksichtigen.

Eine solche Berücksichtigung individueller Brillenträger- bzw. Kundendaten bei der Herstellung progressiver Brillengläser erfordert jedoch einen technologisch aufwendigen Design- und Herstellungsprozeß, um derartige individuelle Progressivgläser bei angemessenen Lieferzeiten unter wirtschaftlich vertretbaren Herstellungskosten zu fertigen. Als Ausgangspunkt für die Fertigung derartiger Progressivgläser kommen Brillenglasrohlinge (auch als sogenante "Blanks" oder Brillenglashalbfertigprodukte bezeichnet) zum Einsatz, bei welchen beispielsweise nur die nicht-progressive Vorderfläche fertig bearbeitet ist. Die augenseitige Rückfläche, welche die progressive Wirkung bereitstellt, läßt sich jedoch in dem Fall, daß die astigmatische Wirkung ebenfalls von der progressiven Fläche aufgebracht werden soll aufgrund der großen Anzahl notwendiger progressiver Flächen nicht als Standardprodukt "auf Lager" legen. Stattdessen müssen derartige Progressivgläser individuell auf Bestellung gefertigt werden. So werden bei etwa 9 bis 12 Additionen zu Korrektur der Alterssichtigkeit und 3 bis 6 Basiskurven zu groben Abdeckung der sphärischen Fehlsichtigkeit und 20 Zylinderwerten bei 90 Achslagen bereits über 100 000 verschiedene Progressivflächen benötigt.

Somit ist bei modernen progressiven Brillengläsern eine individuelle Fertigung der Progressivfläche oftmals geboten. Da ohnehin die Progressivfläche individuell für einen bestimmten Brillenträger gefertigt werden muß, wurde in den eingangs genannten Schriften vorgeschlagen, auch individuelle Brillenträgerdaten (Kundendaten) bei der Berechnung und Optimierung der individuellen Progressivfläche zu berücksichtigen.

Bei Einstärkengläsern müssen jedoch im Vergleich zu den beschriebenen Progressivgläsem erheblich weniger Flächendesigns vorgehalten werden, um zu einer entsprechend zufriedenstellenden Abdeckung der Verordnung eines Brillenträgers zu gelangen. Demgemäß wurde es im Stand der Technik für nicht nötig und sogar als nachteilig erachtet, individuelle Brillenträgerdaten (Kundendaten) eines bestimmten Brillenträgers bei der Berechnung und Optimierung eines Einstärkenbrillenglases zu berücksichtigen, da ein derartiges Vorgehen zu vermeintlich nur geringen optischen Verbesserungen, jedoch zu einer erheblichen Verteuerung des Brillenglases und somit zu einem vermeintlich wirtschaftlich nicht vertretbaren Preis-Leistungsverhältnis führen würde.

Aufgabe der Erfindung ist es, ein Verfahren zur Herstellung eines Einstärkenbrillenglases anzugeben, welches im Vergleich zu herkömmlichen Einstärkenbrillengläsern verbesserte optischen Eigenschaften und einen verbesserten Tragekomfort aufweist. Aufgabe der Erfindung ist es ferner, eine Vorrichtung zur Herstellung eines entsprechenden Brillenglases sowie ein entsprechendes Brillenglas anzugeben.

Diese Aufgaben werden durch ein Verfahren mit den in Anspruch 1 genannten Merkmalen, eine Vorrichtung mit den in Anspruch 18 genannten Merkmalen und ein Einstärkenbrillenglas mit den in Anspruch 19 genannten Merkmalen gelöst. Bevorzugte Ausführungsformen sind Gegenstand der abhängigen Ansprüche.

Gemäß der Erfindung umfaßt ein Verfahren zur Herstellung eines Einstärkenbrillenglases unter Berücksichtigung individueller Brillenträgerdaten eines bestimmten Brillenträgers, wobei das Einstärkenbrillenglas eine rotationssymetrische Basisfläche und eine rotationssymetrische asphärische oder atorische Rezeptfläche aufweist, folgende Schritte:
- Erfassen von individuellen Brillenträgerdaten des bestimmten Brillenträgers;
- Auswahl eines Brillenglasrohlings (d.h. eines "Blanks" mit einer vorbestimmten Basisfläche und vorbestimmten Flächenbrechwert D1 im Scheitel); und
- Berechnen und Optimieren der Rezeptfläche unter Berücksichtigung zumindest eines Teils der individuellen Brillenträgerdaten zusätzlich zu einer Anpassung der dioptrischen Wirkung durch die Rezeptfläche an die Verordnung des Brillenträgers.

Der Erfindung liegt die Erkenntnis zugrunde, daß überraschenderweise auch bei Einstärkenbrillengläsern durch Berücksichtigung individueller Brillenträgerdaten bei der Berechnung und Optimierung der Rezeptfläche signifikante Verbesserungen insbesondere der optischen Eigenschaften und des Tragekomforts eines derartigen individuellen Einstärkenbrillenglases erzielt werden können, welche die im Vergleich zur herkömmlichen Einstärkenbrillengläsern erhöhten Fertigungskosten rechtfertigen. Die Erfindung überwindet somit ein im Stand der Technik fest verankertes Vorurteil, wonach die Berücksichtigung individueller Brillenträgerdaten lediglich bei progressiven Brillengläsern, deren großen vorzuhaltende Mannigfaltigkeit an unterschiedlichen Flächen oftmals ohnehin eine individuelle Fertigung der Progressivfläche erfordert, sinnvoll ist.

Gemäß dem erfindungsgemäßen Verfahren werden somit Einstärkenbrillengläser hergestellt, welche individuell auf einen bestimmten, vorbekannten Brillenträger abgestimmt sind. Hierbei werden individuelle Brillenträgerdaten (Kundendaten) des bekannten Brillenträgers berücksichtigt, welche zeitlich vor dem Berechnungsund Optimierungsprozeß der Rezeptfläche erfaßt wurden. Bei derartigen Brillenträgerdaten kann es sich - wie später ausführlich dargestellt werden wird - um augenspezifische Brillenträgerdaten oder um anwendungsspezifische Brillenträgerdaten (beispielsweise Einsatzgebiet des Einstärkenbrillenglases, Fassungsform, etc.) handeln.

Gemäß dem erfindungsgemäßen Verfahren erfolgt die Herstellung des (individuellen) Einstärkenbrillenglases als zweistufiger Prozeß. Nach dem Erfassen der individuellen Brillenträgerdaten des bestimmten Brillenträgers wird zunächst ein Brillenglasrohling mit vorbestimmter Basisfläche aus einer Gruppe von vorgefertigten Brillenglasrohlingen, d.h. von Brillenglashalbfertigprodukten mit vorgefertigter Basisfläche mit vorbestimmten Flächenbrechwert im Scheitel, ausgewählt. Unter Berücksichtigung zumindest eines Teils der erfaßten individuellen Brillenträgerdaten wird sodann individuell für den Brillenträger die Rezeptfläche in Gebrauchsstellung berechnet und optimiert. Dies beinhaltet in jedem Fall eine dioptrische Wirkungsanpassung an die Verordnung des Brillenträgers durch die Rezeptfläche, wobei die dioptrische Wirkung insbesondere die sphärische Verordnung, die astigmatische Verordnung inklusive der Achslage und die prismatische Verordnung inklusive der Basislage umfaßt. Zusätzlich zu dieser Anpassung der dioptrischen Wirkung durch die Rezeptfläche an die Verordnung des Brillenträgers erfolgt eine Optimierung der Rezeptfläche unter Berücksichtigung zumindest eines Teils weiterer individueller Brillenträgerdaten.

Vorzugsweise ist die Basisfläche die Vorderfläche und die Rezeptfläche die Rückfläche des Einstärkenbrillenglases. Vorzugsweise ist die Basisfläche eine sphärische Fläche und die Rezeptfläche eine Fläche ohne Symmetrien.

Gemäß einer bevorzugten Ausführungsform des erfindungsgemäßen Verfahrens werden bei dem Schritt des Auswählens des Brillenglasrohlings die individuellen Brillenträgerdaten berücksichtigt. Soll beispielsweise das Einstärkenbrillenglas als Sportbrille Verwendung finden, können bei der Herstellung individuelle, anwendungsspezifische Brillenträgerdaten insoweit eingehen, daß eine Vorderfläche mit starker Durchbiegung bzw. Fassungsscheibenwinkel gewählt wird. Somit kann bei dem Schritt des Auswählens des Brillenglasrohlings ein derartiger Basisflächenverlauf berücksichtigt werden.

Gemäß einer weiteren bevorzugten Ausführungsform umfassen die individuellen Brillenträgerdaten Anwendungsgebiete des Brillenträgers für den Einsatz der Einstärkenbrille. Insbesondere kann das Anwendungsgebiet eine Sportbrille sein. Sportbrillen zeichnen sich dadurch aus, daß sie große Durchbiegungen (bzw. Basiskurven), also eine sehr starke Krümmung der Vorderfläche, und einen großen Fassungsscheibenwinkel aufweisen. Unter dem Fassungscheibenwinkel, oftmals auch als Seitenneigungswinkel oder Verkippungswinkel bezeichnet, wird hierbei der Winkel zwischen der optischen Achse eines Brillenglases under der Fixierlinie des Auges in Primärstellung verstanden.

Vorzugsweise beträgt bei dem Anwendungsgebiet des Einstärkenbrillenglases als Sportbrillenglas für eine Sportbrille die Seitenneigung mehr als 5 Grad, vorzugsweise mehr als 10 Grad, und die Basiskurve der Vorderfläche mehr als 6 dpt, vorzugsweise mehr als 10 dpt. Die Seitenneigung kann hierbei sehr hohe Werte bis zu insbesondere 30 Grad annehmen. Bei einem derartigen Sportbrillenglas ergeben sich besondere erfindungsgemäße Vorteile durch die Berücksichtigung der hohen Seitenneigung sowie der hohen Basiskurve bei der Herstellung, welche sich in erheblich verbesserten optischen Eigenschaften verglichen mit entsprechenden herkömmlichen Sportbrillengläsern äußern. Insbesondere kann bei einem bevorzugten erfindungsgemäß hergestellten Sportbrillenglas erreicht werden, daß die Abbildungsfehler in Gebrauchsstellung über den gesamten Brillenglasbereich unter 0,5 dpt liegen.

Hinsichtlich der verwendeten Fachterminologie wird insbesondere auf "Optik und Technik der Brille" von Heinz Diepes und Ralf Blendowske, Optische Fachveröffentlichung GmbH, Heidelberg, 2002, verwiesen, dessen entsprechende Ausführungen insoweit einen intergralen Offenbarungsbestandteit der vorliegenden Anmeldung darstellen. Weitere mögliche Anwendungsgebiete sind beispielsweise Nahsichtbrillen für Musiker oder für den Extremnahbereich optimierte Brillen für Uhrmacher oder Feinwerktechniker.

Vorzugsweise umfassen die individuellen Brillenträgerdaten die Pupillendistanz, die Vorneigung, die Seitenneigung, den Fassungsscheibenwinkel, die Durchmuschelung der Fassung und/oder die habituelle Kopfhaltung des Brillenträgers.

Gemäß einer weiteren bevorzugten Ausführungsform umfassen die individuellen Brillenträgerdaten eine Zentrierforderung, insbesondere die Augendrehpunktsforderung, die Bezugspunktsforderung oder die Gesichtsfeldforderung.

Vorzugsweise umfassen die individuellen Brillenträgerdaten den Augendrehpunktsabstand und/oder die Baulänge des Auges des Brillenträgers.

Vorzugsweise umfassen die individuellen Brillenträgerdaten den Hornhautscheitelabstand HSA.

Gemäß einer weiteren bevorzugten Ausführungsform umfassen die individuellen Brillenträgerdaten einen typischen Objektabstand von mit dem Einstärkenbrillenglas zu betrachtenden Objekten, wobei der Objektabstand insbesondere eine Funktion der Durchblickstelle durch das Einstärkenbrillenglas sein kann. Beispielsweise kann das Einstärkenbrillenglas derartig ausgebildet sein, daß ein in Gebrauchsstellung oberer Teil der Rezeptfläche für den Fernbereich optimiert und ein unterer Teil für den Nahbereich optimiert ist, ohne daß jedoch eine Wirkungsänderung wie bei einem progressiven Brillenglas erfolgt. Vorzugsweise umfassen die individuellen Brillenträgerdaten die Fassungsform der vom Brillenträger gewählten Brillenfassung. Hierdurch kann insbesondere bei "+" - Gläsern sichergestellt werden, daß für die Herstellung des individuellen Einstärkenglases Rohrundgläser lediglich mit der minimal notwendigen Dicke gewählt werden.

Gemäß einer weiteren bevorzugten Ausführungsform umfassen die individuellen Brillenträgerdaten die Art der Ametropie und bei dem Schritt des Berechnens und Optimierens der Rezeptfläche erfolgt die Designvorgabe nach Art der Ametropie (Myopie/Hyperopie/Presbyopie). Hierdurch wird insbesondere den unterschiedlichen Blickfeldern aufgrund der prismatischen Wirkung Rechnung getragen.

Vorzugsweise umfassen die individuellen Brillenträgerdaten die binokularen Eigenschaften des Brillenträgers, insbesondere bei Anisometropie, Heterophorie, mikroanomale Netzhautkorrespondenz oder alternierendes Sehen.

Gemäß einer weiteren bevorzugten Ausführungsform umfassen die individuellen Brillenträgerdaten prismatische Komponenten der Verordnung.

Vorzugsweise umfassen die individuellen Brillenträgerdaten die physiologischen Anforderungen des Brillenträgers, insbesondere den Ausgangsvisus, seine Sehgewohnheiten und Modelle für die Augen- und Kopfbewegung.

Vorzugsweise umfassen die individuellen Brillenträgerdaten die Sehschärfe des Brillenträgers. So können bei einem Brillenträger, welcher lediglich über eine geringere Sehschärfe verfügt, mehr Abbildungsfehler zugelassen und dementsprechend Sollvorgaben gewählt werden, welche beispielsweise eher zugunsten kosmetischer Eigenschaften des Brillenglases gewählt sind. Andererseits können bei Brillenträgern, welche eine besonders hohe Sehanforderung haben (beispielsweise Uhrmacher), die Sollvorgaben derart gewählt werden, daß ein zentraler Bereich mit lediglich minimalsten Abbildungsfehlern bereitgestellt wird.

Vorzugsweise beträgt die Anzahl der Basisflächen der Brillenglasrohlinge ungefähr 5 bis 25.

Gemäß einem weiteren Aspekt der Erfindung umfaßt eine Vorrichtung zur Herstellung eines Einstärkenbrillenglases, welches eine rotationsymmetrische Basisfläche und eine rotationssymmetrische asphärische oder atorische Rezeptfläche aufweist, unter Berücksichtigung individueller Brillenträgerdaten eines bestimmten Brillenträgers:
- Erfassungsmittel zum Erfassen individueller Brillenträgerdaten des bestimmten Brillenträgers,
- Auswahlmittel zum Auswählen eines Brillenglasrohlings mit vorbestimmter Basisfläche aus einer Gruppe von Brillenglasrohlingen; und
- Berechnungs- und Optimierungsmittel zum Berechnen und Optimieren der Rezeptfläche unter Berücksichtigung zumindest eines Teils der individuellen Brillenträgerdaten zusätzlich zu einer Anpassung der dioptrischen Wirkung durch die Rezeptfläche an die Verordnung des Brillenträgers.

Gemäß einem weiteren Aspekt der Erfindung wird ein individuelles Einstärkenbrillenglas für einen bestimmten Brillenträger vorgeschlagen, welches eine rotationssymmetrische Basisfläche und eine rotationssymmetrische asphärische oder atorische Rezepttläche aufweist, wobei die Rezeptfläche ausgebildet ist, zumindest einen Teil von individuellen Brillenträgerdaten des Brillenträgers zu berücksichtigen.

Vorzugsweise ist das individuelle Einstärkenbrillenglas ein Sportbrillenglas für eine Sportbrille, welches eine Seitenneigung von mehr als 5 Grad, vorzugsweise mehr als 10 Grad, und einer Basiskurve von mehr als 6 dpt aufweist.

Die Erfindung wird im folgenden unter Bezugnahme auf die beigefügten Zeichnungen beispielhaft beschrieben. Es zeigen
Fig. 1 ein vereinfachtes Flußdiagramm eines bevorzugten erfindungsgemäßen Verfahrens zum Herstellen eines individuellen Einstärkenglases;
Fig.2 eine Höhenliniendarstellung des astigmatischen Fehlers eines herkömmlichen Brillenglases ohne Korrektionswirkung mit einer Basiskurve von 6,5 dpt und einem Fassungsscheibenwinkel von 30 Grad;
Fig.3(a) eine Höhenliniendarstellung des astigmatischen Fehlers eines herkömmlichen sphärischen Brillenglases ohne Verkippung;
Fig. 3(b) eine Höhenliniendarstellung des astigmatischen Fehlers des in Fig. 2(a) dargestellten Brillenglases mit einer Verkippung von 15°C;
Fig.3(c) eine Höhenliniendarstellung des astigmatischen Fehlers eines herkömmlichen torischen Einstärkenglases mit einer Verkippung von 15°C; und
Fig. 3(d) eine Höhenliniendarstellung des astigmatischen Fehlers eines bevorzugten erfindungsgemäßen Einstärkenglases, welches gemäß eines bevorzugten erfindungsgemäßen Herstellungsverfahrens berechnet wurde.

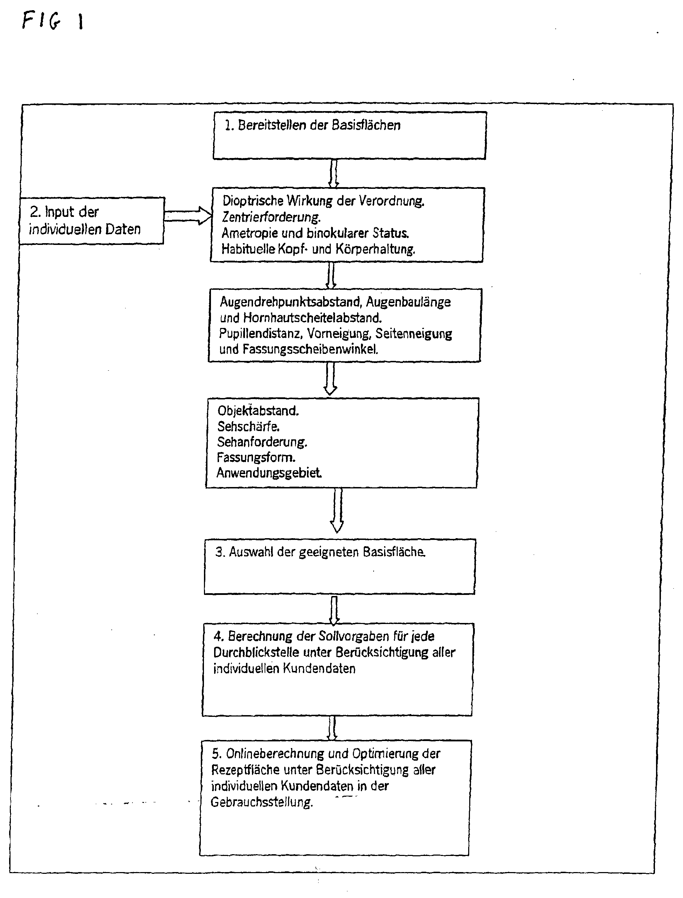

**Fig. 1** zeigt anhand eines schematischen Flußdiagramms eine bevorzugte Variante eines erfindungsgemäßen Herstellungsverfahrens. Wie in Fig. 1 dargestellt ist, läßt sich das bevorzugte erfindungsgemäße Herstellungsverfahren für ein individuelles Einstärkenglas in fünf wesentliche Schritte gliedern. Zunächst werden in Schritt 1 eine bestimmte Anzahl von Brillenglasrohlingen mit vorbestimmten Basisflächen bereitgestellt. Beispielsweise können ungefähr 5 bis 25 unterschiedliche Basisflächen vorgesehen werden. Derartige Brillenglasrohlinge, welche auch als Brillenglashalbfertigprodukte bezeichnet werden, sind lediglich auf einer Glasseite komplett bearbeitet, d.h. besitzen lediglich eine fertige optische Fläche. Eine sogenannte Rezeptschleiferei bearbeitet die andere Glasseite, welche im folgenden als Rezeptfläche bezeichnet wird, nach entsprechenden Vorgaben. Vorzugsweise wird die augenseitige Fläche, d.h. die Rückfläche des Einstärkenglases, als Rezeptfläche individuell bearbeitet. Unter der Basiskurve, welche auch als Grundkurve bezeichnet wird, wird somit der nominale Flächenbrechwert der Vorderfläche des Einstärkenglases verstanden.

Wie in Schritt 2 von Fig. 1 dargestellt ist, erfolgt gemäß dem bevorzugten Herstellungsprozeß des indiviuellen Einstärkenglases sodann die Eingabe von individuellen Daten, welche im folgenden auch als individuelle Brillenträgerdaten bzw. Kundendaten bezeichnet werden. Diese individuellen Brillenträgerdaten können augen- oder anwendungsspezifische Informationen sein, welche einem besimmten Brillenträger, für welchen das individuelle Einstärkenbrillenglas gefertigt werden soll, zugeordnet sind. Derartige Brillenträgerdaten können unterschiedlichste individuelle Eigenschaften bzw. Parameter sowie insbesondere anwendungsspezifische Zusatzinformationen des Brillenträgers umfassen. Von zentraler Bedeutung ist in diesem Zusammenhang selbstverständlich die dioptrische Wirkung der Verordnung des Brillenträgers. Zu nennen sind ferner die Zentierforderung, die Ametropie und der binokulare Status sowie die habituelle Kopf- und Körperhaltung. Ferner können die individuellen Brillenträgerdaten auch den Augendrehpunktsabstand, die Augenbaulänge und den Hornhautscheitelabstand, die Pupillendistanz, die Vorneigung, die Seitenneigung und den Fassungsscheibenwinkel umfassen.

Als individuelle Brillenträgerdaten können ferner der typischerweise zu erwartende Objektabstand sowie das Anwendungsgebiet, d.h. anwendungsspezifische Brillenträgerdaten berücksichtigt werden. Ferner kann auch die Sehschärfe bzw. die Sehanforderung des Brillenträgers in den Herstellungsprozeß der individuellen Rezeptfläche Eingang finden, so daß beispielsweise bei einer lediglich reduziert vorliegenden Sehschärfe des Brillenträgers kosmetischen Faktoren im Designprozeß ein größerer Stellenwert eingeräumt werden kann. Ferner kann auch die Fassungsform der Brillenfassung in den Herstellungsprozeß des Einstärkenbrillenglases Eingang finden, um beispielsweise bei "+"-Gläsern ein rohrundes Brillenglas mit kleinstmöglicher Mittendicke auswählen zu können. Vorzugsweise wird eine geeignete Basisfläche bzw. ein geeigneter Brillenglasrohling bereits unter Berücksichtigung zumindest eines Teils der oben genannten individuellen Brillenträgerdaten ausgewählt (Schritt 3). Beispielsweise kann der Fassungsscheibenwinkel bei der Auswahl der geeigneten Basisfläche bzw. des Brillenglasrohlings von Wichtigkeit sein, insbesondere wenn das Brillenglas als stark gekrümmtes Sportbrillenglas verwendet werden soll.

In einem nachfolgenden Schritt 4 werden für jede Durchblickstelle des Einstärkenbrillenglases unter Berücksichtigung vorzugsweise aller, zumindest jedoch eines Teils, der genannten individuellen Kunden- bzw. Brillenträgerdaten Sollvorgaben berechnet. In einem darauffolgenden Berechnungs- und Optimierungsschritt, bei welchem es sich insbesondere um sogenannte "online"-Schritte handeln kann, wird die individuell zu fertigende Rezeptfläche unter Berücksichtigung vorzugsweise aller individuellen Brillenträgerdaten, zumindest jedoch eines Teils der individuellen Brillenträgerdaten, in der Gebrauchsstellung berechnet bzw. optimiert.

Eine bevorzugte Ausführungsvariante des erfindungsgemäßen Herstellungsverfahren sowie Eigenschaften eines bevorzugten erfindungsgemäßen individuellen Einstärkenglases werden im folgenden anhand eines Einstärkenglases mit großer Seitenneigung bzw. großem Fassungsscheibenwinkel beschrieben, wie es insbesondere für Sportbrillen verwendet wird.

Gläser für Sportbrillen zeichnen sich dadurch aus, daß sie oftmals im Vergleich zu normalen Brillengläsern große Durchbiegungen, d.h. sehr starke Krümmungen der Vorderfläche, und große Fassungsscheibenwinkel aufweisen. Regelmäßig beträgt die für solche Brillengläser gewählte Basiskurve über 10 dpt, während sie für normale Brillengläser ohne Korrektionswirkung typischerweise unter 6 dpt liegt. Die Fassungsscheibenwinkel derartiger Sportbrillengläser liegen regelmäßig über 10 Grad und somit ebenfalls über entsprechenden Werten normaler Brillengläser, welche typischerweise Fassungsscheibenwinkel unter 5 Grad aufweisen.

Diese stark erhöhten Werte für Basiskurve und Fassungsscheibenwinkel wirken sich jedoch nachteilig auf die Abbildungseigenschaften des Brillenglases aus. Diese Problematik ist bei Sportbrillen ohne Korrektionswirkung schon seit längerem erkannt worden. So gibt es eine Reihe von Patentanmeldungen und Patenten, die sich mit diesem Thema beschäftigen, wobei an dieser Stelle lediglich auf die WO 99/525480 sowie die US 5,648,832, die US 5,969,789 und die US 5,689,323 verwiesen wird.

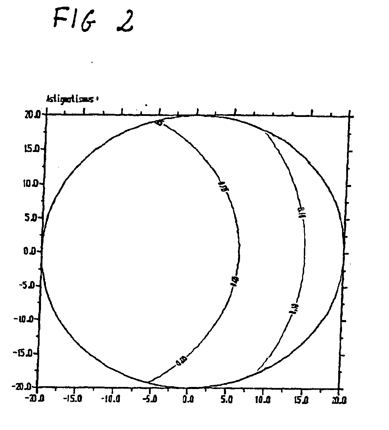

**Figur 2** zeigt expemplarisch eine Höhenliniendarstellung des astigmatischen Fehlers (Kombination Brillenglas und Auge) eines herkömmlichen (Sport-) Brillenglases ohne Korrektionswirkung mit einer Basiskurve von 6,5 dpt, welches einen hohen Fassungsscheibenwinkel von 30 Grad aufweist. Dargestellt sind die Höhenlinien für einen astigmatischen Fehler von 0,05 dpt (linke Höhenlinie in Fig. 2) und 0,10 dpt (rechte Höhenlinie in Fig. 2). Bei einem horizontalen Abstand von x=15 mm von der optischen Mitte beträgt der astigmatische Fehler tolerable 0,10 dpt.

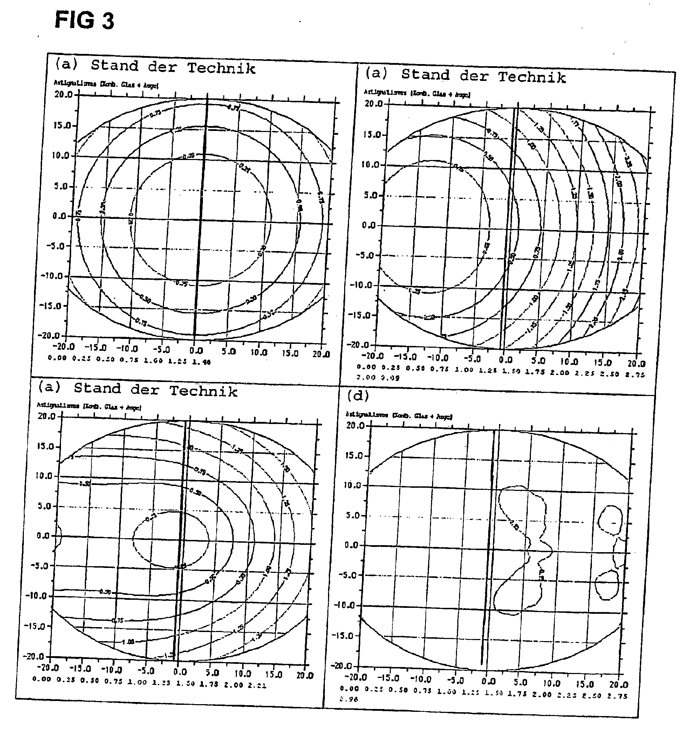

Jedoch ist bei Brillengläsern mit Korrektionswirkung ein erheblich stärkerer negativer Einfluß des hohen Fassungsscheibenwinkels auf die Abbildungseigenschaften zu verzeichnen, da sich bei einem Brillenglas mit Wirkung 0 dpt beispielsweise die prismatische Wirkung nur minimal über dem Brillenglas ändert. Dies wird im folgenden anhand der Figuren 3(a) bis (d) expemplarisch dargestellt.

In Figuren 3(a) bis (d) sind Höhenliniendarstellungen des astigmatischen Fehlers von unterschiedlichen Einstärkengläsern dargestellt. Sämtliche Einstärkengläser weisen eine dioptrische Gesamtwirkung Sph = + 6,0 dpt auf, wobei die Vorderfläche im Scheitel einen Flächenbrechwert von D1 = 6,5 dpt aufweist. Die Rechnungen beziehen sich auf einen Brechungsindex von n = 1,597 des Brillenglases.

**Fig. 3(a)** zeigt ein herkömmliches sphärisches Einstärkenglas ohne Verkippung.

Bei dem Brillenglas handelt es sich um ein herkömmliches Einstärkenglas der Rodenstock GmbH, welches unter dem Markennamen "Perfalit" vertrieben wird. Der astigmatische Fehler (Kombination von Brillenglas und Auge) ist in Höhenliniendarstellung gezeigt, wobei die kreisförmigen Höhenlinien von innen nach außen 0,25 dpt, 0,50 dpt, 0,75 dpt und 1,00 dpt betragen. Wie aus Fig. 3(a) ersichtlich ist, ist der astigmatische Fehler der Kombination Glas und Auge im Bereich des Scheitels vergleichsweise gering.

Wird jedoch - wie in **Fig. 3(b)** dargestellt ist - das in Fig. 3(a) gezeigte herkömmliche Einstärkenglas um einen Winkel von 15°C entlang einer Vertikalachse gekippt, verschlechtern sich die Abbildungseigenschaften nachhaltig, was wiederum aus der Höhenliniendarstellung des astigmatischen Fehlers (Höhenlinienabstand 0,25 dpt) ersichtlich ist. Bereits bei einem horizontalen Abstand von x=15 mm von der optischen Mitte tritt ein astigmatisacher Fehler von 2,00 dpt auf, welcher somit erheblich über dem entsprechenden Wert des in Fig. 2 gezeigten Brillenglases ohne Korrektionswirkung liegt. Auch in der Mitte des Brillenglases beträgt der astigmatische Fehler bereits 0,4 dpt und führt somit zu einer ausgeprägten Vernebelung der optischen Abbildung.

Im Stand der Technik wurde angesichts des anhand von Fig. 3(b) beschriebenen Problems vorgeschlagen, statt der sphärischen Fläche eine torische Fläche zu verwenden. Ein derartiges bekanntes Brillenglas ist in **Fig. 3(c)** zum Vergleich gezeigt, wobei der Fassungsscheibenwinkel wiederum 15° beträgt. Durch den Einsatz einer torischen Fläche gelingt es, zumindest in der Mitte den astigmatischen Fehler zu korrigieren und auch in der Peripherie zu verbessern. Jedoch beträgt der astigmatische Fehler bei einem horizontalen Abstand x = 15 mm von der optischen Mitte noch immer inakzeptable 1,00 dpt, so daß die Abbildungseigenschaften in der Peripherie weiterhin unzufriedenstellend sind.

**Fig. 3(d)** zeigt demgegenüber ein individuelles Einstärkenbrillengfas, bei welchem die Verkippung als individuelle Brillenträgerdaten bei der Berechnung und Optimierung der individuellen Rezeptfläche berücksichtigt wurde. Die in Fig. 3(d) einzig sichtbare Höhlenlinie des astigmatischen Fehlers ist die 0,25 dpt - Höhenlinie. Im Vergleich zu den Abbildungseigenschaften der herkömmlichen Einstärkengläser mit großen Fassungsscheibenwinkeln gemäß Figs. 3(b) und 3(c) ist somit eine erhebliche Verbesserung der Abbildungseigenschaften durch individuelle Berechnung und Optimierung der Rezeptfläche unter Berücksichtigung des Verkippungswinkels, welcher wiederum 15° beträgt, erkennbar. Über den gesamten Bereich liegt bei dem bevorzugten erfindungsgemäßen Brillenglas der astigmatische Fehler unter 0,5 dpt und in großen Bereichen sogar unter 0,25 dpt.

## Patentansprüche

1. Verfahren zur Herstellung eines Einstärkenbrillenglases unter Berücksichtigung individueller Brillenträgerdaten eines bestimmten Brillenträgers, wobei das Einstärkenbrillenglas eine rotationssymetrische Basisfläche und eine rotationssymetrische asphärische oder atorische Rezeptfläche aufweist, umfassend die Schritte:
- Erfassen von individuellen Brillenträgerdaten des bestimmten Brillenträgers;
- Auswahl eines Brillenglasrohlings mit vorbestimmter Basisfläche aus einer Gruppe von Brillenglasrohlingen; und
- Berechnen und Optimieren der Rezeptfläche unter Berücksichtigung zumindest eines Teils der individuellen Brillenträgerdaten zusätzlich zu einer Anpassung der dioptrischen Wirkung durch die Rezeptfläche an die Verordnung des Brillenträgers,
**dadurch gekennzeichnet, daß** der Teil der individuellen Brillenträgerdaten ein Anwendungsgebiet des Brillenträgers für den Einsatz der Einstärkenbrille umfaßt; wobei für das Anwendungsgebiet der Einstärkenbrille die Seitenneigung des Einstärkenbrillenglases mehr als 10 Grad und die Basiskurve der Vorderfläche mehr als 6 dpt beträgt.

2. Verfahren nach Anspruch 1, wobei die Basisfläche die Vorderfläche und die Rezeptfläche die Rückfläche des Einstärkenbrillenglases ist.

3. Verfahren nach Anspruch 1 oder 2, wobei bei dem Schritt des Auswählens des Brillenglasrohlings die individuellen Brillenträgerdaten berücksichtigt werden.

4. Verfahren nach einem der vorangegangenen Ansprüche, wobei die individuellen Briffenträgerdaten die Pupillendistanz, die Vorneigung, die Seitenneigung, den Fassungsscheibenwinkel, die Durchmuschelung der Fassung und/oder die habituelle Kopfhaltung des Brillenträgers umfassen.

5. Verfahren nach einem der vorangegangenen Ansprüche, wobei die individuellen Brillenträgerdaten eine Zentrierforderung, insbesondere die Augendrehpunktsforderung, die Bezugspunktsforderung oder die Gesichtsfeldforderung umfassen.

6. Verfahren nach einem der vorangegangenen Ansprüche, wobei die individuellen Brillenträgerdaten den Augendrehpunktsabstand und/oder die Baulänge des Auges des Brillenträgers umfassen.

7. Verfahren nach einem der vorangegangenen Ansprüche, wobei die individuellen Brillenträgerdaten den Hornhautscheitelabstand umfassen.

8. Verfahren nach einem der vorangegangenen Ansprüche, wobei die individuellen Brillenträgerdaten einen typischen Objektabstand von mit dem Einstärkenbrillenglas zu betrachtenden Objekten umfassen, wobei der Objektabstand insbesondere eine Funktion der Duchblickstelle durch das Einstärkenbrillenglas sein kann.

9. Verfahren nach einem der vorangegangenen Ansprüche, wobei die individuellen Brillenträgerdaten die Fassungsform umfassen.

10. Verfahren nach einem der vorangegangenen Ansprüche, wobei die individuellen Brillenträgerdaten die Art der Ametropie umfaßt und bei dem Schritt des Berechnens und Optimierens der Rezeptfläche die Designvorgabe nach Art der Ametropie erfolgt.

11. Verfahren nach einem der vorangegangenen Ansprüche, wobei die individuellen Brillenträgerdaten die binokularen Eigenschaften des Brillenträgers, insbesondere bei Anisometropie, Heterophorie, mikroanomale Netzhautkorrespondenz oder alternierendes Sehen umfassen.

12. Verfahren nach einem der vorangegangenen Ansprüche, wobei die individuellen Brillenträgerdaten prismatische Komponenten der Verordnung umfassen.

13. Verfahren nach einem der vorangegangenen Ansprüche, wobei die individuellen Brillenträgerdaten die physiologischen Anforderungen des Brillenträgers, insbesondere den Ausgangsvisus, seine Sehgewohnheiten und Modelle für die Augen- und Kopfbewegung umfassen.

14. Verfahren nach einem der vorangegangenen Ansprüche, wobei die individuellen Brillenträgerdaten die Sehschärfe des Brillenträgers umfassen.

15. Verfahren nach einem der vorangegangenen Ansprüche, wobei die Anzahl der Basisflächen ungefähr 5 bis 25 betragen.

16. Vorrichtung zur Herstellung eines Einstärkenbrillenglases unter Berücksichtigung individueller Brillenträgerdaten eines bestimmten Brillenträger, wobei das Einstärkenbrillenglas eine rotationssymetrische Basisfläche und eine rotationssymetrische asphärische oder atorische Rezeptfläche aufweist, umfassend:
- Erfassungsmittel, welche ausgelegt sind, individuelle Brillenträgerdaten des bestimmten Brillenträgers zu erfassen;
- Auswahlmittel, welche ausgelegt sind, einen Brillenglasrohling mit vorbestimmter Basisfläche aus einer Gruppe von Brillenglasrohlingen auszuwählen; und
- Berechnungs- und Optimierungsmittel, welche ausgelegt sind, die Rezeptfläche unter Berücksichtigung zumindest eines Teils der individuellen Brillenträgerdaten zusätzlich zu einer Anpassung der dioptrischen Wirkung durch die Rezeptfläche an die Verordnung des Brillenträgers zu berechnen und zu optimieren,
**dadurch gekennzeichnet, daß** die Berechnungs- und Optimierungsmittel derart ausgelegt sind, daß der Teil der individuellen Brillenträgerdaten ein Anwendungsgebiet
des Brillenträgers für den Einsatz der Einstärkenbrille umfaßt, wobei für das Anwendungsgebiet der Einstärkenbrille die Seitenneigung des Einstärkenbrillenglases mehr als 10 Grad und die Basiskurve der Vorderfläche mehr als 6 dpt beträgt.

## Claims

1. Method for producing a single vision spectacle lens, taking into account individual spectacle wearer data of a specific spectacle wearer, the single vision spectacle lens having a rotationally symmetrical basic surface and a rotationally symmetrical aspheric or atoric prescription surface, comprising the steps:
- determining individual spectacle wearer data of the specific spectacle wearer;
- selecting a spectacle lens blank with a predetermined basic surface from a group of spectacle lens blanks; and
- calculating and optimising the prescription surface, taking into account at least a part of the individual spectacle wearer data in addition to adaptation of the dioptric effect by means of the prescription surface to the prescription of the spectacle wearer,
**characterised in that** the part of the individual spectacle wearer data includes a sphere of use of the spectacle wearer for use of the single vision spectacles; the side inclination of the single vision spectacle lens for the sphere of use of the single vision spectacles being more than 10 degrees, and the basic curve of the front surface being more than 6 dpt.

2. Method according to claim 1, the basic surface being the front surface and the prescription surface being the rear surface of the single vision spectacle lens.

3. Method according to claim 1 or 2, the individual spectacle wearer data being taken into account in the step of selecting the spectacle lens blank.

4. Method according to one of the preceding claims, the individual spectacle wearer data including the pupil distance, the forward inclination, the side inclination, the frame/lens angle, the curvature of the frame and/or the normal head position of the spectacle wearer.

5. Method according to one of the preceding claims, the individual spectacle wearer data including a centring requirement, in particular the eye rotation point requirement, the reference point requirement or the field of vision requirement.

6. Method according to one of the preceding claims, the individual spectacle wearer data including the eye rotation point spacing and/or the constructional length of the eye of the spectacle wearer.

7. Method according to one of the preceding claims, the individual spectacle wearer data including the corneal vertex distance.

8. Method according to one of the preceding claims, the individual spectacle wearer data including a typical object distance from objects to the observed with the single vision spectacle lens, the object distance being able to be in particular a function of the looking position through the single vision spectacle lens.

9. Method according to one of the preceding claims, the individual spectacle lens data including the shape of the frame.

10. Method according to one of the preceding claims, the individual spectacle lens data including the type of ametropia and, in the step of calculating and optimising the prescription surface, the design specification is effected according to the type of ametropia.

11. Method according to one of the preceding claims, the individual spectacle lens data including the binocular properties of the spectacle wearer, in particular in the case of anisometropia, heterophoria, micro abnormal retinal correspondence or alternating vision.

12. Method according to one of the preceding claims, the individual spectacle wearer data including prismatic components of the prescription.

13. Method according to one of the preceding claims, the individual spectacle wearer data including the physiological requirements of the spectacle wearer, in particular the initial vision, his visual habits and models for eye and head movement.

14. Method according to one of the preceding claims, the individual spectacle wearer data including the visual acuity of the spectacle wearer.

15. Method according to one of the preceding claims, the number of basic surfaces being approx. 5 to 25.

16. Device for producing a single vision spectacle lens, taking into account individual spectacle wearer data of a specific spectacle wearer, the single vision spectacle lens having a rotationally symmetrical basic surface and a rotationally symmetrical aspheric or atoric prescription surface, comprising:
- determination means which are designed to determine individual spectacle wearer data of the specific spectacle wearer;
- selection means which are designed to select a spectacle lens blank with a predetermined basic surface from a group of spectacle lens blanks; and
- calculation and optimisation means which are designed to calculate and to optimise the prescription surface, taking into account at least a part of the individual spectacle wearer data in addition to adaptation of the dioptric effect by means of the prescription surface to the prescription of the spectacle wearer,
**characterised in that** the calculation and optimisation means are designed such that the part of the individual spectacle wearer data includes a sphere of use of the spectacle wearer for use of the single vision spectacle, the side inclination of the single vision spectacle lens for the sphere of use of the single vision spectacles being more than 10 degrees, and the basic curve of the front surface being more than 6 dpt.

## Revendications

1. Procédé de fabrication d'un verre de lunettes unifocal tenant compte des données
individuelles d'un porteur de lunettes donné, où le verre de lunettes unifocal présente une surface de base à symétrie de rotation et une surface correctrice asphérique ou atorique à symétrie de rotation, comprenant les étapes suivantes :
- saisie des données individuelles du porteur de lunettes donné ;
- sélection d'une ébauche de verre à surface de base définie à partir d'un groupe d'ébauches de verre ; et
- calcul et optimisation de la surface correctrice en tenant compte d'au moins une partie des données individuelles du porteur de lunettes, en plus d'un ajustement de l'effet de dioptrie de la surface correctrice avec la prescription du porteur de lunettes.

2. Procédé selon la revendication 1, où la surface de base est la face avant du verre de lunettes,
et la surface correctrice la face arrière de celui-ci.

3. Procédé selon la revendication 1 ou la revendication 2, où les données individuelles du porteur de lunettes sont prises en compte lors de l'étape de sélection de l'ébauche de verre.

4. Procédé selon l'une des revendications précédentes, où les données individuelles du porteur de lunettes comprennent l'écart interpupillaire, l'inclinaison longitudinale, l'inclinaison latérale, l'angle pantoscopique, la cambrure globale de la monture et/ou le maintien postural de tête habituel du porteur de lunettes.

5. Procédé selon l'une des revendications précédentes, où les données individuelles du porteur de lunettes comprennent une exigence de centrage, en particulier l'exigence de foyer oculaire, l'exigence de point de référence ou l'exigence de champ visuel.

6. Procédé selon l'une des revendications précédentes, où les données individuelles du porteur de lunettes comprennent la distance focale et/ou la longueur de l'oeil du porteur de lunettes.

7. Procédé selon l'une des revendications précédentes, où les données individuelles du porteur de lunettes comprennent la distance au sommet de la cornée.

8. Procédé selon l'une des revendications précédentes, où les données individuelles du porteur de lunettes comprennent une distance typique d'objets à observer avec le verre de lunettes unifocal, la distance des objets pouvant en particulier être une fonction de la zone de vision au travers du verre de lunettes unifocal.

9. Procédé selon l'une des revendications précédentes, où les données individuelles du porteur de lunettes comprennent la forme de monture.

10. Procédé selon l'une des revendications précédentes, où les données individuelles du porteur de lunettes comprennent le type d'amétropie et où, lors de l'étape de calcul et d'optimisation de la surface correctrice, la définition de projet est effectuée en fonction du type d'amétropie.

11. Procédé selon l'une des revendications précédentes, où les données individuelles du porteur de lunettes comprennent les propriétés binoculaires du porteur de lunettes, en particulier en cas d'anisométropie, d'hétérophorie, de correspondance rétinienne microanormale ou de vision alternante.

12. Procédé selon l'une des revendications précédentes, où les données individuelles du porteur de lunettes comprennent des composantes prismatiques de la prescription.

13. Procédé selon l'une des revendications précédentes, où les données individuelles du porteur de lunettes comprennent les besoins physiologiques du porteur de lunettes, en particulier l'acuité visuelle initiale, ses habitudes de vision et modèles pour les mouvements d'yeux et de tête.

14. Procédé selon l'une des revendications précédentes, où les données individuelles du porteur de lunettes comprennent l'acuité visuelle du porteur de lunettes.

15. Procédé selon l'une des revendications précédentes, où le nombre de surfaces de base est sensiblement compris entre 5 et 25.

16. Dispositif pour la fabrication d'un verre de lunettes unifocal tenant compte des données individuelles d'un porteur de lunettes donné, où le verre de lunettes unifocal présente une surface de base à symétrie de rotation et une surface correctrice asphérique ou atorique à symétrie de rotation, comprenant :
- des moyens de saisie prévus pour saisir des données individuelles du porteur de lunettes donné ;
- des moyens de sélection prévus pour sélectionner une ébauche de verre à surface de base définie à partir d'un groupe d'ébauches de verre ; et
- des moyens de calcul et d'optimisation prévus pour calculer et optimiser la surface correctrice en tenant compte d'au moins une partie des données individuelles du porteur de lunettes, en plus d'un ajustement de l'effet de dioptrie de la surface correctrice à la prescription du porteur de lunettes, **caractérisé en ce que** les moyens de calcul et d'optimisation sont prévus pour que la partie des données individuelles du porteur de lunettes comprenne un champ d'utilisation du porteur de lunettes pour la mise en oeuvre des lunettes unifocales, l'inclinaison latérale du verre de lunettes unifocal étant supérieure à 10 degrés et la courbe de base de la face avant étant supérieure à 6 dpt pour le champ d'utilisation des lunettes unifocales.
